Europäisches Patentamt

European Patent Office

Office européen des brevets

(11) Publication number: **0 455 611 A1**

# EUROPEAN PATENT APPLICATION

(21) Application number: **91830176.3**

(22) Date of filing: **30.04.91**

(51) Int. Cl.5: **A22C 9/00**

(30) Priority: **03.05.90 IT 2019090**

(43) Date of publication of application:
**06.11.91 Bulletin 91/45**

(84) Designated Contracting States:
**AT BE CH DE DK ES GB LI NL**

(71) Applicant: **ALIMATIC S.r.l.**
**Via Pitteri, 111**
**I-20134 Milano(IT)**

(72) Inventor: **Brambilla, Mario, c/o Alimatic S.r.l.**
**Via Pitteri, 111**
**I-20134 Milano(IT)**

(74) Representative: **Cicogna, Franco**
**Ufficio Internazionale Brevetti Dott.Prof.**
**Franco Cicogna Via Visconti di Modrone,**
**14/A**
**I-20122 Milano(IT)**

(54) **Automatic continuous operating system for massaging anatomically well defined salted meat pieces for making boiled hams, "coppas", bacons and the like.**

(57) There is disclosed a continuous system for massaging meat pieces, anatomically well defined, which have been preliminarily processed by injection of pickles and provided for making boiled hams, coppas, bacons and the like.

The system comprises a bearing structure (1), to which there is articulated a frame (3) which can assume a horizontal arrangement and two opposite positions which are slanted with respect to the pivot axis thereof: the frame restrains a cylindrical vessel or "massaging" vessel (5) which can be subjected to a rotary movement and is provided with a laterally tiltable cover (8).

On the mentioned frame, or first frame (3), a second frame (14) can slide, which pivotably bears a fork device (19) adapted to perimetrically restrain an auxiliary vessel (22) included in a plurality of like auxiliary vessels, driven by a carousel apparatus (34), the fork device being so designed and arranged as to upward tilt each auxiliary vessel so as to pour the contents thereof into the massaging cylindric vessel (5).

FIG. 1

Rank Xerox (UK) Business Services

## BACKGROUND OF THE INVENTION

The present invention relates to an automatic continuously operating system for massaging anatomically well-defined salted meat pieces for making boiled hams, coppas, bacons and the like.

As is known, the salting process of hams to be boiled (and of other meat pieces to be seasoned and preserved) comprises a step of injecting, at several points of the meat pieces, a pickle liquour.

For a successful result, the pickle liquour must be evenly distributed through the meat piece fibres, both for a proper salting of all the meat portions, and for preventing undesiderable streakings from forming at the inlet holes of the needles provided for injecting the pickle.

This requirement is conventionally met by subjecting the meat pieces, after the injection of the pickle liquour therein, to a mechanical stirring operation, performed by suitable machines, the so-called "massaging" machines.

These machines comprise, usually, a horizontal axis cylindrical vessel into which the meat pieces to be processed are introduced.

This vessel, by rotating about the axis thereof, causes the several meat pieces to roll both against one another and against the walls of the vessel, so as to facilitate a full diffusion of the pickle liquour through the meat piece fibres.

Conventional meat piece massaging machines, however, have as a main drawback that the meat pieces to be processed must be loaded manually, or by means of outer raising apparatus, adapted to load said meat pieces in the rotary vessel, which involves a lot of labour and requires a comparatively long loading time.

These prior machines, moreover, have like drawbacks with respect to the unloading of the processed meat pieces from the massaging rotary vessel.

In addition to the foregoing, the fact is to be added that these prior massaging machines are rather complex construction-wise and are scarcely reliable in operation.

## SUMMARY OF THE INVENTION

Accordingly, the aim of the present invention is to overcome the above mentioned drawbacks, by providing a system for massaging meat pieces for making boiled hams, coppas and the like, which includes means and devices for automatically loading and unloading into/from the massaging rotary vessel the meat pieces to be processed.

Within the above aim, a main object of the present invention is to provide a system for massaging meat pieces, the massaging vessel of which can be supplied in a continuous way, by using a plurality of suitably driven auxiliary vessels.

Another object of the present invention is to provide a system for massaging meat pieces which is very compact construction-wise and very reliable in operation.

According to one aspect of the present invention, the above mentioned aim and objects, as well as yet other objects, which will become more apparent hereinafter, are achieved by an automatic continuously operating system for massaging anatomically well defined salted meat pieces for making boiled hams, coppas, bacons and the like, characterized in that said system comprises a supporting structure, to which a frame is pivoted, said frame being adapted to assume a horizontal arrangement and two opposite positions slanted with respect to the pivot axis of said frame, and restraining a cylindrical massaging vessel adapted to be rotatively driven and having a laterally tiltable cover, on said frame, moreover, a further frame being slidably supported, said further frame pivotably bearing thereon a fork device provided for perimetrically restraining an auxiliary vessel and for upward tilting said auxiliary vessel so as to pour the contents of said auxiliary vessel into said massaging cylindric vessel.

## BRIEF DESCRIPTION OF THE DRAWINGS

Further characteristics and advantages of the system for massaging meat pieces according to the present invention will become more apparent from the following detailed description of a preferred embodiment thereof which is illustrated, by way of an indicative but not limitative example, in the figures of the accompanying drawings, where:

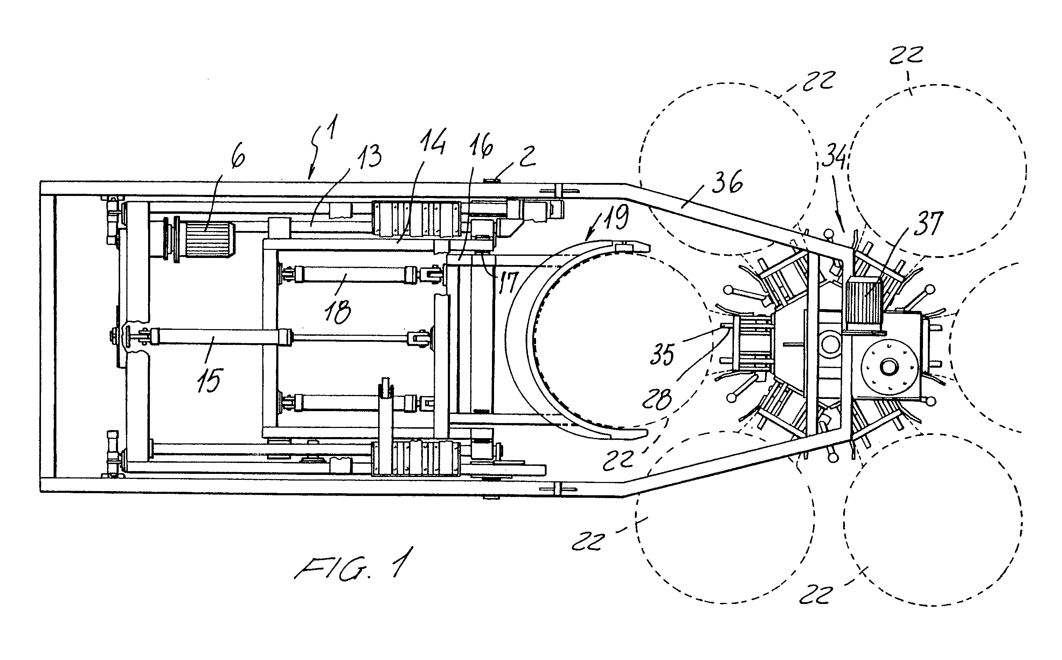

Figure 1 is a top schematic view of the system according to the invention, from which the rotary vessel has been omitted;

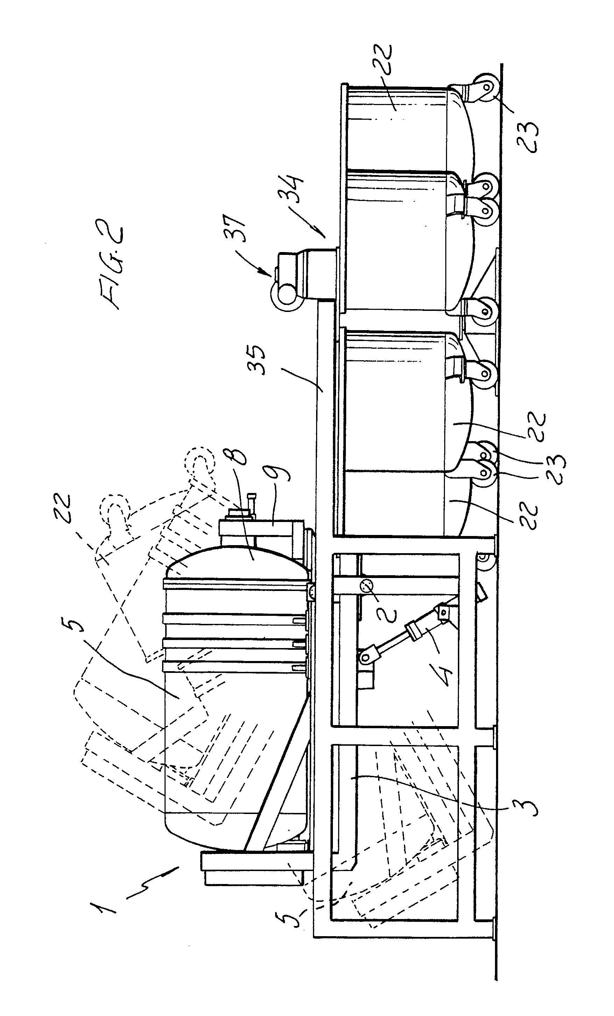

Figure 2 is a schematic elevation view of the system shown in figure 1;

Figure 3 diagrammatically shows an operating step in which the meat pieces are transferred from an auxiliary vessel to the massaging vessel;

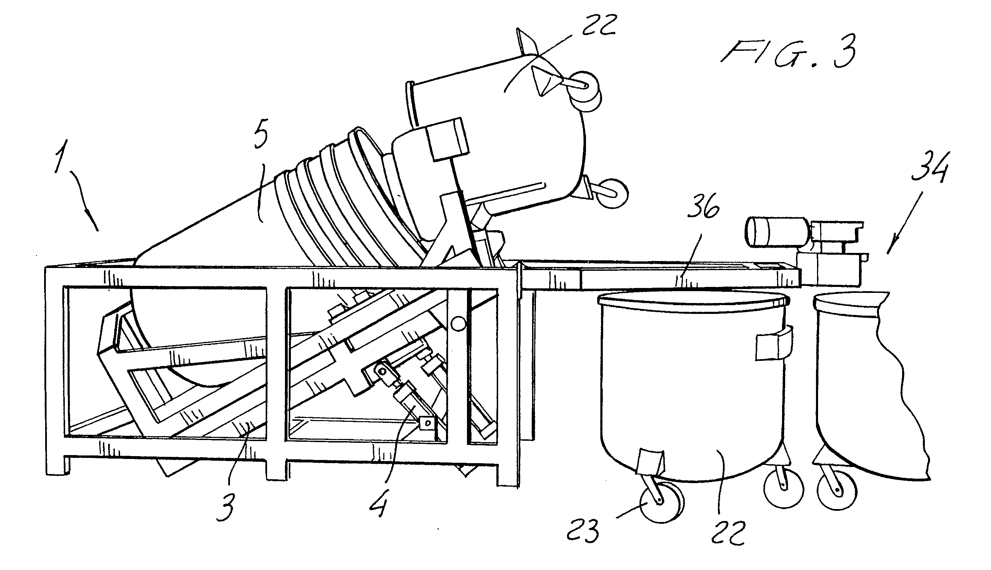

Figure 4 is a perspective view of the system according to the invention, with the massaging vessel shown in a slanted condition, after having loaded into said massaging vessel the meat pieces to be processed;

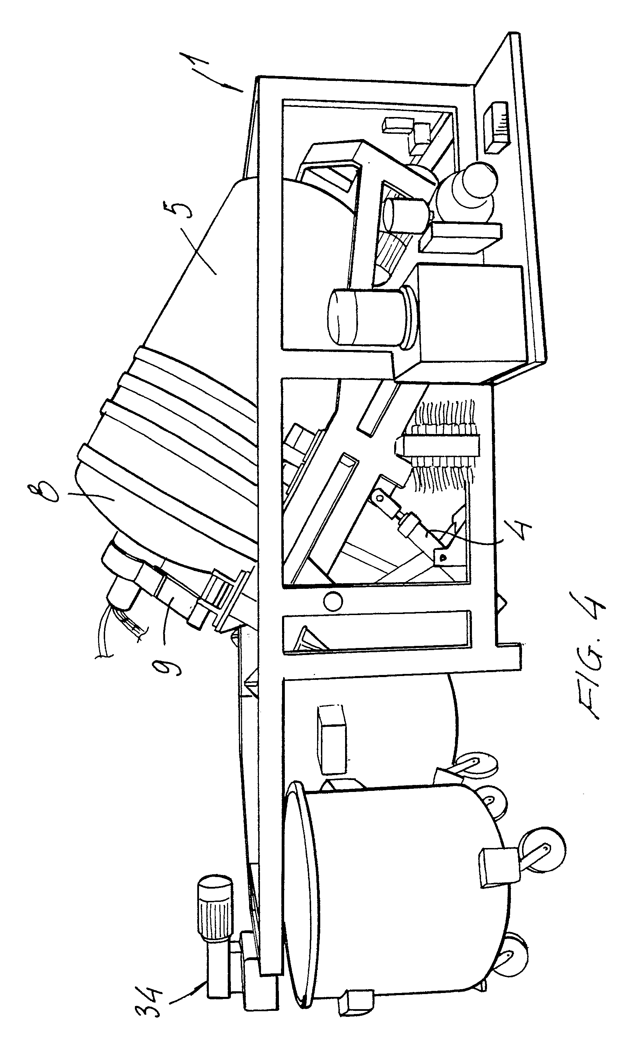

Figure 5 illustrates the articulated coupling of the cover of the massaging vessel;

Figure 6 illustrates the outline of the fork element for raising and tilting the mentioned auxiliary vessels;

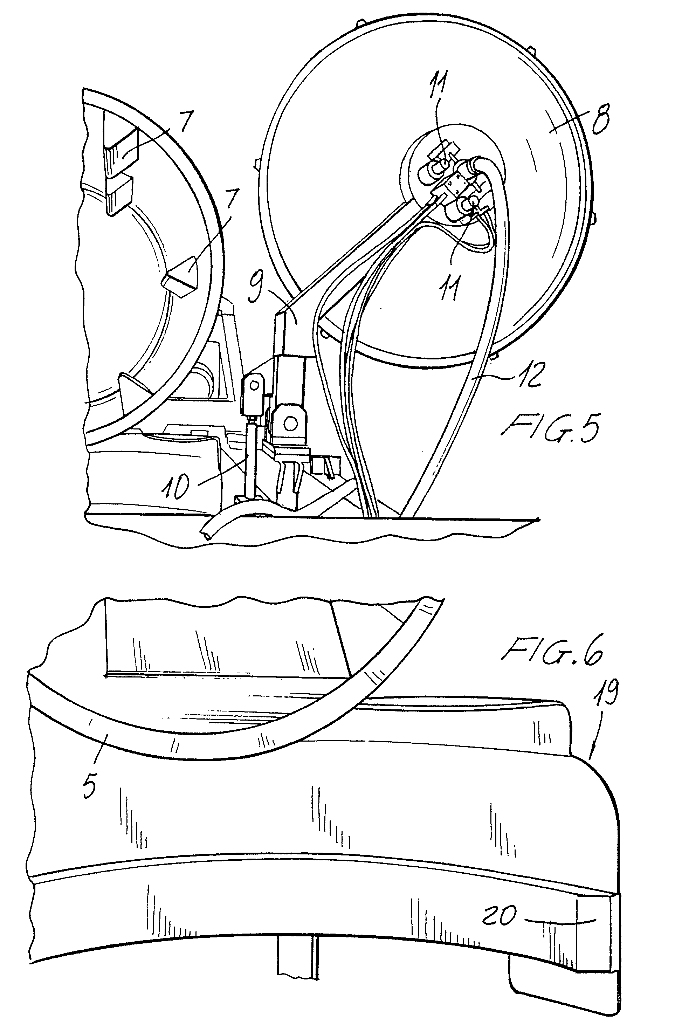

Figure 7 illustrates a portion of the auxiliary vessel provided for coupling to the mentioned fork element or device;

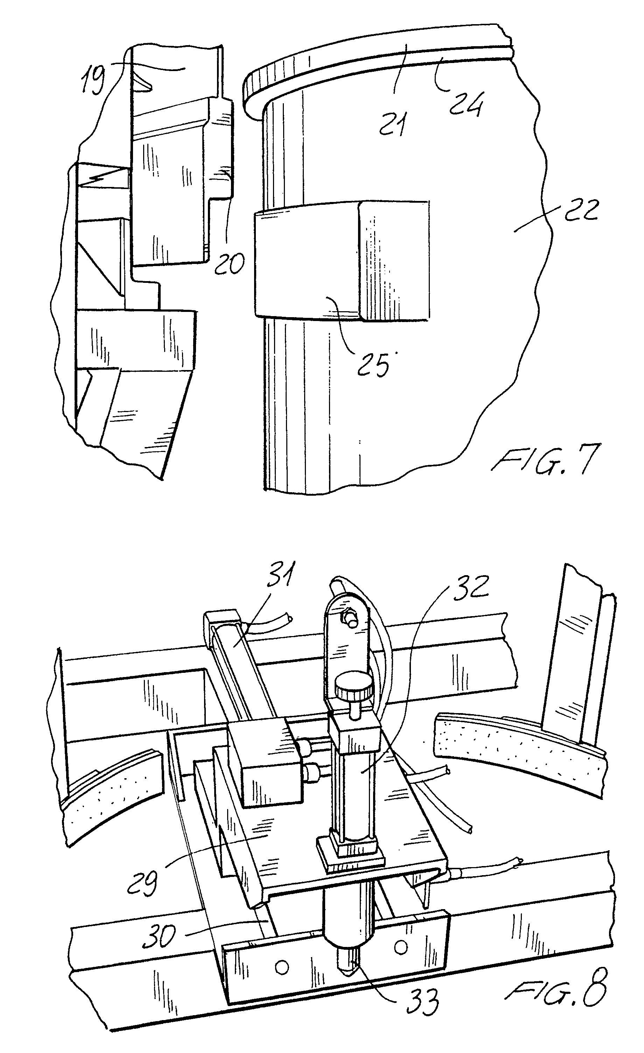

Figures 8 and 9 respectively illustrate a pin element for restraining the auxiliary vessel, and a procedure for coupling said pin element on said auxiliary vessel;
and

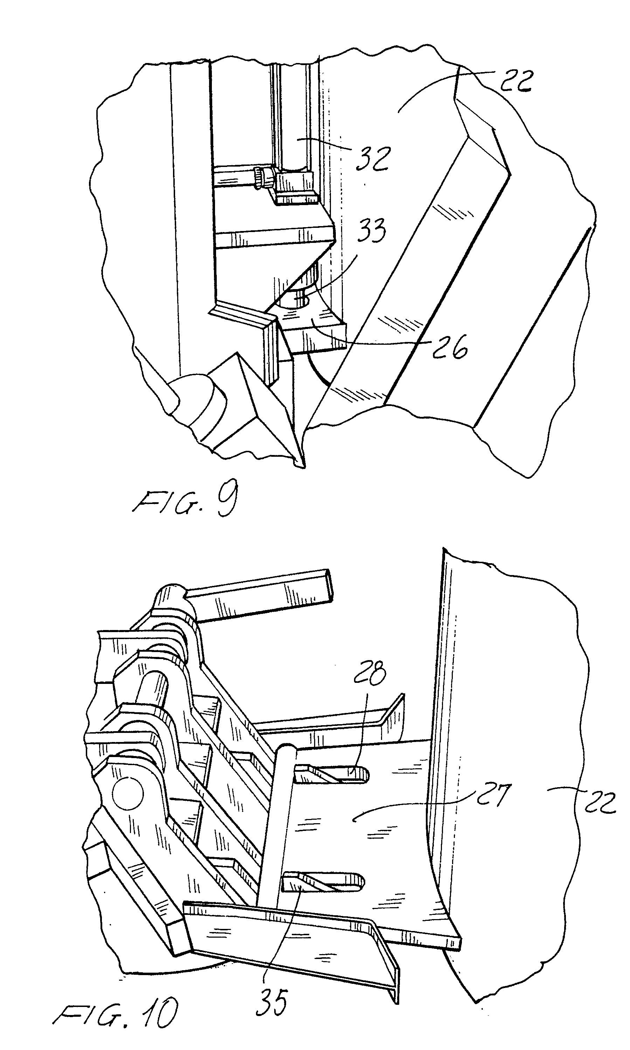

Figure 10 illustrates a possible procedure for engaging the several auxiliary vessels onto a carousel apparatus adapted to align, in succession, the auxiliary vessels with respect to the mentioned fork element or device.

## DESCRIPTION OF THE PREFERRED EMBODIMENTS

With reference to the figures of the accompanying drawings, the automatic continuous operating system for massaging anatomically well defined salted meat pieces for making boiled hams, coppas, bacons and the like, according to the present invention comprises a supporting structure overally indicated at the reference number 1, on a pair of uprights of which there is pivoted, on its horizontal axis 2, a frame 3, the position of which, either horizontal or slanted, can be controlled by two cylinders 4 which are pivoted on the bottom cross-members of said structure.

On said frame there is restrained a cylindrical vessel 5, or massaging vessel, which is adapted for turning about its longitudinal axis under the control of a motorized reducing unit 6, therewith a suitable driving assembly cooperates.

In this connection, it should be pointed out that the mentioned massaging vessel is turned, either in a direction or in the opposite direction, according to set time intervals, and, moreover, the turning movement can occur with a variable speed.

The massaging vessel is provided, on its inner wall, with longitudinal ridges 7 and is provided with a tiltable cover 8, mounted on a lever arm 9, driven by a cylinder 10.

More specifically, the cover is fixedly restrained on a pair of pins 11 so that it can slide therealong as hydraulically or pneumatically controlled, and is provided with a sucking duct 12 adapted to provide a vacuum inside the vessel.

On the frame 3, moreover, there are provided two longitudinal guides 13, thereon a second frame 14 can slide, said second frame being driven by a cylinder 15.

This second frame, in turn, pivotably supports a third frame 16 which can swing about pin elements 17, under the control of a pair of cylinders 18, and being provided with a cantilever fork element, overally indicated at 19.

More specifically, the mentioned fork element has a half-round configuration and is provided, at the bottom thereof, with an inner ridge or lug 20, which is adapted to engage within a corresponding space 21 of an auxiliary vessel 22, mounted on swinging wheels 23.

This space restraining the end portions of the fork element, in particular, is defined by the projecting edge 24 of the vessel and by ridges or lugs 25 as radially formed thereon at diametrically opposite positions.

On the base or bottom of that same auxiliary vessel, moreover, there are provided, at an intermediate position with respect to the mentioned radially extending ridges, respectively a braket provided a central hole 26, and a projecting plate 27 having at least two elongated openings or slots 28.

On the front portion of the supporting structure 1, moreover, there is provided a trolley 29, comprising a plate slidable along guides 30, as controlled by one or more cylinders 31.

This trolley supports, in turn, a vertical cylinder 32, driving a pin element 33 which can be engaged in the hole formed through the braket arranged at the bottom of the auxiliary vessel.

In particular, a plurality of these auxiliary vessels are restrained on a carousel apparatus, overally indicated at the reference number 34, provided with tooth latching elements 35, which are resiliently urged, and engaged in elongated slots of the projecting plate 27 of the auxiliary vessels.

The carousel apparatus, in particular, is rigid with the supporting frame 1 by means of top longitudinal members 36 defining said supporting structure, and is rotatably driven by a suitable step motor 37 which is power supplied in a timed relationship with respect to the operation of the massagin vessel.

In operation, after having filled the auxiliary vessel with pickle processed meat pieces, said auxiliary vessels are individually brought in front of the fork element 19.

Then, this fork element 19 is caused to advance by the cylinder 15, so as to encompass and restrain the auxiliary vessel arranged before it.

Then, the frame 3 is tilted by the cylinders 4, so as to raise the auxiliary vessel and cause the massaging vessel 5 to assume a corresponding position 5' forming with the horizontal line an angle of about 30°.

Then, the cylinders 18 are operated so as to further tilt the fork element, and, accordingly, the auxiliary vessel, to cause the meat pieces to fall from the auxiliary vessel into the massaging vessel.

After this step, the frame with the fork element is brought again to a horizontal condition, so as to unload to the ground the auxiliary vessel, and then the pin element 33 is engaged in the hole of the braket 26 arranged at the bottom of the auxiliary vessel.

At this time, the cover 8 is arranged on the massaging vessel, by turning the arm 9 and displacing it along the pins 11, so as to provide a tight sealing and allow air to be sucked from its inside.

The massaging vessel is then brought again to a horizontal condition, and is rotatively driven for a set period of time.

At the end of this period of time, the massaging vessel is tilted so as to turn its mouth upward, and, after having recovered therein an athmospheric pressure, the cover is removed therefrom.

Then, the cylinders 4 tilt the frame 3 so as to arrange the massaging vessel open mouth above the underlaying auxiliary vessel which, in turn, is fixedly locked by the pin 33 driven by the cylinder 32 against the bottom of the trolley 29.

In particular, in order to unload all of the meat pieces, it is provided that the massaging vessel performs, after a set period of time, at least a full revolution about its longitudinal axis.

At the end of this operation, the mentioned pin 33 is raised, so as to disengage the auxiliary vessel which is pushed again by the fork element 19 toward the carousel apparatus and being herein engaged, through the slots of the plate 27, in the corresponding tooth restraining elements or pins 33.

Then, the fork element 19 is withdrawn into the supporting structure and the carousel apparatus is caused to partially turn.

At the end of this rotary movement, a further auxiliary vessel is arranged in front of the fork element, and a new processing operation begins.

From the above disclosure and drawings it should be apparent that the system according to the invention fully achieves the intended aim and objects.

While the invention has been disclosed and illustrated with reference to a preferred embodiment thereof, it should be apparent that the disclosed embodiment is susceptible to several modifications and variations all of which will come within the spirit and scope of the appended claims.

## Claims

1. An automatic continuously operating system for massaging anatomically well defined salted meat pieces for making boiled hams, coppas, bacons and the like, characterized in that said system comprises a supporting structure, to which a frame is pivoted, said frame being adapted to assume a horizontal arrangement and two opposite positions slanted with respect to the pivot axis of said frame, and restraining a cylindrical massaging vessel adapted to be rotatively driven and having a laterally tiltable cover, on said frame, moreover, a further frame being slidably supported, said further frame pivotally bearing thereon a fork device provided for perimetrically restraining an auxiliary vessel and for upward tilting said auxiliary vessel so as to pour the contents of said auxiliary vessel into said massaging cylindrical vessel.

2. A system according to Claim 1, characterized in that said frame is brought to its horizontal or slanted position by two cylinders pivoted to the bottom cross-members of said supporting structure, and that the massaging vessel is adapted to rotate about its longitudinal axis under the control of a motorized reducing unit cooperating with a movement transmission assembly, said unit causing said massaging vessel to be turned either in a direction or in an opposite direction, in set time periods, this rotary movement occurring with a variable speed.

3. A system according to Claims 1 and 2, characterized in that said massaging vessel is provided on its inner wall, with longitudinal ridges and a tiltable cover mounted on a lever arm driven by a cover cylinder, said cover being mounted on a pair of pins so as to slide along said pins under pneumatic or hydraulic control, and being provided with a sucking duct adapted to form a vacuum in the inside of said massaging vessel.

4. A system according to one or more of the preceding claims, characterized in that on said frame there are provided two longitudinal guides, therelong a second frame can slide, said second frame being driven by a second frame cylinder and pivotably supporting thereon a third frame which can swing about a pair of pins, under the control of a pair of pivoted cylinders, said third frame supporting said fork element.

5. A system, according to one or more of the preceding claims, characterizing in that said fork element has a half-round outline and is provided, at the bottom thereof, with an inner ridge which can engage in a corresponding space defined on said auxiliary vessels, said auxiliary vessels being mounted on a swinging wheel, said space restraining the end portions of said fork element being defined by the projecting top edge of said vessel and further ridges radially formed on said vessel at diametrically opposite positions.

6. A system according to one or more of the preceding claims, characterized in that on the bottom of said auxiliary vessel there are provided, at an intermediate position with respect to said radially extending ridges, respectively a braket provided with a central hole and a projecting plate including at least two elongated slots.

7. A system according to one or more of the preceding claims, characterized in that on the front portion of said supporting structure there is provided a trolley including a trolley plate which can slide along guides under the control of one or more cylinders, said trolley supporting a vertical cylinder which drives a pin element provided for engaging in said hole formed through said braket arranged at the bottom of said auxiliary vessel.

8. A system according to one or more of the preceding claims, characterized in that said system comprises a plurality of said auxiliary vessels restrained on a carousel apparatus including corresponding tooth latching elements, resiliently urged, engaged in elongated slots of the auxiliary vessel projecting plate, said carousel apparatus being rigid with said supporting structure and being rotatively driven by a step motor which is power supplied depending on the operative steps of said massaging vessel.

FIG. 1

FIG.2

FIG.3

FIG. 4

EP 0 455 611 A1

FIG.5

FIG.6

FIG.7

FIG.8

11

FIG. 9

FIG. 10

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-4 791 705   (COROMINAS)<br>* column 4, line 13 - column 6, line 68; claims 1,2 *<br>– – – | 1-3,8 | A 22 C 9/00 |
| A | EP-A-0 127 608   (PROSENBAUER)<br>* page 5, line 21 - page 8, line 21 *<br>– – – | 1-3 | |
| A | GB-A-1 232 905   (FALBORG)<br>* the whole document *<br>– – – | 3 | |
| A | WO-A-8 908 982   (PROSENBAUER)<br>– – – | | |
| A | GB-A-2 085 742   (GOULD)<br>– – – | | |
| A | FR-A-2 204 357   (ALLGEMEINE HOLDING-UND HANDEL-SGESELLSCHAFT TRUST)<br>– – – – – | | |

| TECHNICAL FIELDS SEARCHED (Int. Cl.5) |
|---|
| A 22 C |

The present search report has been drawn up for all claims

| Place of search | Date of completion of search | Examiner |
|---|---|---|
| The Hague | 26 July 91 | DE LAMEILLIEURE D. |

CATEGORY OF CITED DOCUMENTS

X : particularly relevant if taken alone
Y : particularly relevant if combined with another
    document of the same catagory
A : technological background
O : non-written disclosure
P : intermediate document
T : theory or principle underlying the invention

E : earlier patent document, but published on, or after
    the filing date
D : document cited in the application
L : document cited for other reasons

 

& : member of the same patent family, corresponding
    document